# EUROPÄISCHE PATENTANMELDUNG

(11) **EP 4 843 653 A1**
(43) Veröffentlichungstag der Anmeldung: **25.11.2026**
(21) Anmeldenummer: 25178663.8
(22) Anmeldetag: 23.05.2025
(51) Int. Cl.: B01D 46/10, B01D 46/52

(54) **FILTERELEMENT MIT HERVORSTEHENDEM ENDABSCHNITT**

(71) Anmelder: Pfannenberg GmbH, 21035 Hamburg (DE)
(72) Erfinder: Matthes, Simon, 21035 Hamburg (DE); Müller, Philipp, 21035 Hamburg (DE); Preißer, David, 21035 Hamburg (DE)
(74) Vertreter: RGTH

(57) **Zusammenfassung**

Um eine Filteranordnung für einen Filterlüfter bzw. einen Austrittsfilter, welche optimierte Filtereigenschaften aufweist, bereitzustellen, wird eine Filteranordnung (100) für einen Filterlüfter (300) oder Austrittsfilter (200) vorgeschlagen, umfassend ein Grundgehäuse (10) und ein in dem Grundgehäuse (10) angeordnetes flächiges Filterelement (11) zur Filterung von durch das Grundgehäuse (10) strömender Luft, wobei das Filterelement (11) zumindest einen von einer ebenen Fläche (12) des Filterelements (11) hervorstehenden Endabschnitt (13) aufweist, wobei der Endabschnitt (13) an dem Grundgehäuse (10) anliegt.

## Beschreibung

Die Erfindung betrifft eine Filteranordnung für einen Filterlüfter oder Austrittsfilter, ein Filterelement sowie einen Austrittsfilter oder Filterlüfter aufweisend eine solche Filteranordnung.

Zur Klimatisierung eines Innenraums, beispielsweise eines Innenraums eines Schaltschranks, sind Filterlüfter bekannt, welche eine Lüfterfördereinrichtung, beispielsweise ein Lüfterrad, aufweisen sowie einen Filter zur Filterung von von der Lüfterfördereinrichtung in den Innenraum hinein oder aus dem Innenraum heraus geförderter Luft. Weist die Filteranordnung keinen Lüfter, sondern nur einen Filter auf, spricht man häufig auch von Austrittsfiltern. Auch beim Austrittsfilter kann die Luft in beide Richtungen durch den Austrittsfilter strömen, je nach Einbausituation. Der Filterlüfter oder Austrittsfilter weist in der Regel ein Grundgehäuse auf, wobei der Filterlüfter oder Austrittsfilter mittels des Grundgehäuses in einer Wandöffnung des Schaltschranks angeordnet ist.

Der Austrittsfilter oder Filterlüfter umfasst ein Filterelement zur Filterung der Luft, wobei das Filterelement in Bezug auf die Größe an dessen Aufnahmebereich in dem Grundgehäuse angepasst ist. Dabei ist die Größe des Filterelements meist nur unwesentlich größer als der durchströmte Querschnitt des Austrittsfilters oder Filterlüfters.

Kommt es nun zu einem Verrutschen des Filterelements durch eine fehlerhafte Montage oder durch die Ansammlung von Feuchtigkeit in dem Filterelement, wodurch das Filterelement aufgrund des erhöhten Gewichts nach unten rutscht, entsteht ein Spalt, durch welchen ungefilterte Luft in den Innenraum strömen kann.

Der Erfindung liegt daher die Aufgabe zugrunde, eine Filteranordnung für einen Filterlüfter bzw. einen Austrittsfilter bereitzustellen, welche, insbesondere auch bei einem Verrutschen des Filterelements, optimierte Filtereigenschaften aufweist.

Die erfindungsgemäße Aufgabe wird gelöst durch eine Filteranordnung für einen Filterlüfter oder Austrittsfilter, umfassend ein Grundgehäuse und ein in dem Grundgehäuse angeordnetes flächiges Filterelement zur Filterung von durch das Grundgehäuse strömender Luft, wobei das Filterelement zumindest einen von einer ebenen Fläche des Filterelements hervorstehenden Endabschnitt aufweist, wobei der Endabschnitt an dem Grundgehäuse anliegt.

Bei dem flächigen Filterelement handelt es sich insbesondere um eine Filtermatte. Beim Filterelement kann es sich um verschiedene Filterarten handeln, wie eine Flusenfiltermatte, eine Vliesmatte bzw. ein Vliesfilter, ein Schaumstofffilter, ein engmaschiges Sieb oder eine Faltenfiltermatte. Das flächige Filterelement ist insbesondere flexibel bzw. elastisch ausgestaltet.

Insbesondere erstreckt sich die ebene Fläche des Filterelements senkrecht zu einer Strömungsrichtung von durch die Filteranordnung strömender Luft. Die ebene Fläche des Filterelements ist insbesondere eine Oberfläche bzw. ein Bereich einer Oberfläche des Filterelements. Insbesondere erstreckt sich die ebene Fläche des Filterelements über eine von der Luft durchströmten Querschnittsfläche der Filteranordnung. Insbesondere im ordnungsgemäßen Betrieb des Austrittsfilters bzw. des Filterlüfters, das heißt in einem Zustand, in dem das Filterelement gegenüber seiner bestimmungsgemäßen Einbaulage nicht verrutscht ist, erstreckt sich die ebene Fläche des Filterelements über die gesamte durchströmte Querschnittsfläche. Die ebene Fläche ist insbesondere jene Fläche, welche im ordnungsgemäßen Betrieb des Austrittsfilters bzw. des Filterlüfters die filternde Fläche bzw. Bereich darstellt.

Von der ebenen Fläche des Filterelements erstreckt sich der hervorstehende Endabschnitt. Insbesondere erstreckt sich der Endabschnitt im Wesentlichen senkrecht von der ebenen Fläche. Der Endabschnitt erstreckt sich somit im ordnungsgemäßen Betrieb nicht in der durchströmten Querschnittsfläche, sondern liegt, insbesondere vollständig in Bezug auf einen flächigen Bereich des Endabschnitts, an dem Grundgehäuse an. Insbesondere liegt der Endabschnitt an einer Innenwand des Grundgehäuses an.

Mit anderen Worten bildet der Endabschnitt insbesondere einen abgewinkelten oder abgeknickten Abschnitt des flächig ausgebildeten Filterelements. Der Endabschnitt ist entsprechend bevorzugt ebenfalls flächig ausgebildet. Der Endabschnitt bzw. dessen Fläche ist sehr viel kleiner gegenüber einer Fläche des übrigen Bereichs bzw. der durchströmten Ebene des Filterelements. Bevorzugt ist das Filterelement im eingebauten Zustand in einer Querschnittsansicht in Strömungsrichtung der Luft im Wesentlichen L-förmig ausgebildet.

Im ordnungsgemäßen Betrieb des Austrittsfilters bzw. des Filterlüfters wird der Endabschnitt im Wesentlichen nicht von Luft durchströmt. Insbesondere sind die flächigen Bereiche des Endabschnitts im Wesentlichen nicht von Luft durchströmt.

Kommt es nun zu einem Verrutschen des Filterelements aus seiner bestimmungsgemäßen Einbaulage für den ordnungsgemäßen Betrieb, würde bei bekannten Filteranordnungen ein Spalt entstehen, durch welchen Luft an dem Filter vorbei ungefiltert in den Innenraum strömen könnte. Die Bildung eines solchen Spalts wird durch den von der ebenen Fläche des Filterelements hervorstehenden Endabschnitt vorteilhaft verhindert. Kommt es zu einem Verrutschen des Filterelements rutscht der Endabschnitt ebenfalls aus seiner Ausgangslage anliegend an dem Gehäuse in die von der Luft durchströmte Querschnittsfläche bzw. Querschnittsebene. Der Endabschnitt deckt dann vorteilhaft jenen Bereich ab, in welchem bei herkömmlichen Filteranordnungen ein Spalt entsteht, durch welchen Luft ungefiltert hindurchströmen könnte. Somit wird mit Vorteil erreicht, dass auch bei einem Verrutschen des Filterelements weiterhin der vollständige Luftstrom gefiltert wird und das Filterelement weiterhin seine vollständige Filterwirkung beibehält.

Bevorzugt ist das flächige Filterelement einstückig ausgebildet. Alternativ können der Bereich der flächigen Ebene des Filterelements und der hervorstehende Endabschnitt unterschiedliche, zusammengesetzte Elemente, insbesondere aus unterschiedlichen Materialien, sein.

Bevorzugt kann der Endabschnitt selbst ein Filterabschnitt des Filterelements sein bzw. aus einem Filtermaterial bestehen oder dieses umfassen. Dadurch kann im Falle des Nachrutschens des Endabschnitts in die luftdurchströmte Querschnittsfläche der Endabschnitt ebenfalls die Luft filtern. Alternativ ist es auch denkbar, dass der Endabschnitt keine Filterwirkung aufweist und beispielsweise luftundurchlässig ausgebildet ist.

Das Grundgehäuse kann bevorzugt ein rahmenartiges Gehäuseteil umfassen, in dem das Filterelement angeordnet ist. Das Grundgehäuse kann ferner einen Gehäusedeckel aufweisen, welcher insbesondere abnehmbar ist bzw. geöffnet werden kann. Der Gehäusedeckel ist im eingebauten Zustand der Filteranordnung insbesondere zur Umgebung hin orientiert, sodass der Gehäusedeckel beispielsweise zum Tausch des Filterelements zugänglich ist. Der Gehäusedeckel weist bevorzugt Lamellen auf, durch welche die Luft aus der Umgebung in das Grundgehäuse durch das Filterelement strömt. Alternativ kann der Gehäusedeckel keine Lamellen aufweisen.

Bevorzugt ist der Teil des Grundgehäuses, an dem der Endabschnitt des Filterelements anliegt ein innenliegender Wandabschnitt des rahmenartigen Gehäuseteils des Grundgehäuses. Insbesondere ist der rahmenartige Gehäuseteil in einer Querschnittsbetrachtung viereckig, insbesondere quadratisch, und umfasst vier Seitenabschnitte, wobei der Endabschnitt bevorzugt an, insbesondere ausschließlich, einem oder mehreren, beispielsweise zwei gegenüberliegenden, Seitenabschnitten anliegt. Die Ausformung kann ferner ebenfalls in einer Querschnittbetrachtung senkrecht zur Luftströmungsrichtung im Wesentlichen viereckig, insbesondere quadratisch, sein.

Die Filteranordnung kann Teil des Filterlüfters oder eines Austrittsfilters eines Filterlüfters sein. Der Austrittsfilter bzw. der Filterlüfter kann in einer Wandfläche angeordnet sein zum Fördern von Luft in einen Innenbereich, insbesondere eines Innenbereichs eines zu klimatisierenden Schaltschranks, bzw. zum Fördern von Luft aus dem Innenbereich heraus. Der Austrittsfilter bildet zusammen mit einer an dem Austrittsfilter angeordneten Luftfördereinrichtung, beispielsweise einem Lüfterrad, den Filterlüfter.

Bevorzugt ist das Filterelement in Strömungsrichtung der einströmenden Luft betrachtet vor einer in das Innere des Grundgehäuses hineinragenden Ausformung des Grundgehäuses angeordnet, wobei zwischen der Ausformung und einer Innenwand des Grundgehäuses wenigstens ein Aufnahmeraum ausgebildet ist, in welchen sich der Endabschnitt erstreckt. Insbesondere wird der Aufnahmeraum durch die Innenwand und die Ausformung begrenzt. Der Aufnahmeraum grenzt somit bevorzugt unmittelbar an die Ausformung an. Die Ausformung weist bevorzugt einen flächigen Bereich auf, welcher bevorzugt an dem Filterelement anliegt. Die Ausformung stellt bei Betrachtung auf das Grundgehäuse von außen eine, insbesondere flächige, Vertiefung in dem Grundgehäuse dar. Alternativ kann der Aufnahmeraum durch eine von dem Grundgehäuse nach außen vorstehende Ausformung gebildet sein. Die Ausformung ist insbesondere in einer Seitenfläche des Grundgehäuses angeordnet. Bevorzugt erstreckt sich die Ausformung vollständig oder abschnittsweise entlang der Seitenfläche. Die Seitenfläche kann insbesondere eine zu dem Innenraum hin orientierte Seitenfläche des Grundgehäuses sein.

Dadurch, dass die Ausformung in das Innere des Grundgehäuses hineinragt wird seitlich der Ausformung bzw. um die Ausformung herum ein zusätzlicher Bauraum geschaffen, welcher den Aufnahmeraum darstellt, in welchen sich der Endabschnitt des Filterelements hineinerstrecken kann. Mit anderen Worten kann das Filterelement bereichsweise an der Ausformung anliegen bzw. um diese herumgeführt sein.

In Strömungsrichtung der einströmenden Luft betrachtet befindet sich der Aufnahmeraum seitlich, insbesondere angrenzend, von der bzw. an die Ausformung. Dadurch kann der Aufnahmeraum mit Vorteil bereitgestellt werden ohne die Einbautiefe des Filteranordnung vergrößern zu müssen. In Strömungsrichtung der einströmenden Luft betrachtet kann der Aufnahmeraum entlang des gesamten oder eines Teil des Umfangs der Ausformung erstrecken. Insbesondere kann sich der Aufnahmeraum vollumfänglich um die Ausformung erstrecken, während sich der Endabschnitt nur in einen Teil des Aufnahmeraums erstreckt.

Bevorzugt ist der Aufnahmeraum bezogen auf einen eingebauten Zustand der Filteranordnung, insbesondere ausschließlich, oberhalb der Ausformung angeordnet. Entsprechend erstreckt sich auch der Endabschnitt in einem oberen Bereich des Grundgehäuses. Im Falle eines Verrutschens des Filterelements aufgrund von Feuchtigkeit, welche von dem Filterelement aufgenommen wurde, rutscht das Filterelement aufgrund der Schwerkraft in einen unteren Bereich des Grundgehäuses. In diesem Fall kann der Endabschnitt von oben vorteilhaft nachrutschen, um die Bildung eines Spalts für ungefilterte Luft im oberen Bereich zu verhindern. Ferner ist es denkbar, dass auch unterhalb der Ausformung ein weiterer Aufnahmeraum zwischen der Ausformung und dem Grundgehäuse ausgebildet ist, in welchen sich ein zweiter Endabschnitt von der Ebene des Filterelements in analoger Weise zu dem ersten Endabschnitt hineinerstreckt.

Bevorzugt können ferner weitere Aufnahmeräume seitlich, insbesondere einseitig oder beidseitig, bzw. in Strömungsrichtung betrachtet links und/oder rechts der Ausformung vorgesehen sein, in welche sich ein dritter und/oder vierter Endabschnitt des Filterelements hineinerstreckt. Dies ist insbesondere vorteilhaft, um ein seitliches Verrutschen des Filterelements zu verhindern, beispielsweise, wenn ein Wasserstrahl schräg auf das Filterelement trifft und dieses seitlich verschiebt. Bevorzugt wird ein Endabschnitt bzw. dessen Kante in diesem Fall durch, insbesondere ausschließlich, Knicken bzw. eine Kompression des Filterelements gebildet. Insbesondere ist das Filterelement entlang der Kante nicht vorgeprägt, geschnitten oder mit Ausnahme des Knickens bzw. Komprimierens anderweitig bearbeitet, um die Kante zu bilden. Bevorzugt kann der Endabschnitt durch Knicken bzw. Komprimieren des Filterelements an einem nachstehend noch näher beschriebenen Halteelement gebildet werden.

Bevorzugt sind Aufnahmeräume ausschließlich seitlich bzw. in Strömungsrichtung betrachtet links und/oder rechts der Ausformung vorgesehen, in welche sich jeweils ein Endabschnitt erstreckt. Insbesondere sind dann oben und unten keine Aufnahmeräume vorgesehen. Insbesondere sind dann ferner oben und unten keine hervorstehenden Endabschnitte vorgesehen. Bevorzugt weist das Filterelement an den beiden seitlich hervorstehenden Endabschnitten eine schlitzförmige Vertiefung auf, wobei die Vertiefung bevorzugt durch Schneiden oder Heißprägen gebildet ist oder das Filterelement weist in diesen Bereichen bevorzugt eine Verjüngung auf, wobei die Verjüngung bevorzugt durch eine Naht gebildet ist, welche das Material des Filterelements im Bereich der Kante komprimiert. Bevorzugt können die Endabschnitte bzw. deren Kanten in diesem Fall durch Knicken bzw. eine Kompression des Filterelements gebildet werden.

Bevorzugt ist die Ausformung des Grundgehäuses ein Schutzelement, insbesondere ein Schutzgitter. Das Schutzelement bildet bevorzugt den flächigen Bereich der Ausformung. Das Schutzgitter ist insbesondere ein Berührungsschutzgitter. Durch das Schutzelement strömt insbesondere die aus dem Filterelement austretende Luft bzw. die in das Filterelement hineinströmende Luft strömt zuvor durch das Schutzelement.

Bevorzugt ist eine Fläche des Filterelements im flach ausgebreiteten Zustand größer als eine Querschnittsfläche des Grundgehäuses senkrecht zu einer Strömungsrichtung der einströmenden Luft in dem Bereich, in dem das Filterelement angeordnet ist. Der flach ausgebreitete Zustand des Filterelements bezieht sich auf einen Zustand, in dem der Endabschnitt nicht von der ebenen Fläche des Filterelements hervorsteht, sondern die ebene Fläche und der Endabschnitt bzw. ein flächiger Bereich des Endabschnitts in derselben Ebene angeordnet sind. Der Endabschnitt ist nicht abgewinkelt bzw. abgeknickt von der ebenen Fläche. Mit anderen Worten ist eine Summe des Flächeninhalts der ebenen Fläche und des flächigen Bereichs des Endabschnitts größer als die Querschnittsfläche des Grundgehäuses senkrecht zu einer Strömungsrichtung der einströmenden bzw. ausströmenden Luft in dem Bereich, in dem das Filterelement angeordnet ist.

Bevorzugt umfasst die Filteranordnung wenigstens ein Halteelement, bevorzugt zwei Halteelemente, welche an dem Filterelement anliegen zur Fixierung des Filterelements in dem Grundgehäuse, wobei das Filterelement bevorzugt klemmend zwischen dem Halteelement und einer in das Innere des Grundgehäuses hineinragenden Ausformung des Grundgehäuses aufgenommen ist. Das wenigstens eine Halteelement ist bevorzugt an dem Gehäusedeckel des Grundgehäuses angeordnet. Bevorzugt ist das Haltelement ein in das Innere des Grundgehäuses hervorstehender Steg, welcher sich parallel zur flächigen Ebene des Filterelements erstreckt.

Bevorzugt ragt das wenigstens eine, bevorzugt beide, Halteelement bzw. Haltelemente in das Innere des Grundgehäuses hinein, wobei der Aufnahmeraum zwischen dem Halteelement und der Innenwand des Grundgehäuses ausgebildet ist, in welchen sich der Endabschnitt erstreckt. Bevorzugt ist ausschließlich zwischen dem Halteelement und der Innenwand oder ausschließlich zwischen der Ausformung und der Innenwand ein Aufnahmeraum ausgebildet. Alternativ kann sowohl zwischen dem Halteelement und der Innenwand und zwischen der Ausformung und der Innenwand ein Aufnahmeraum vorgesehen sein. In diesem Fall weist das Filterelement bevorzugt an zwei sich gegenüberlegenden Seiten jeweils einen hervorstehenden Endabschnitt auf, wobei sich je ein Endabschnitt in eine der Aufnahmeräume erstreckt. In diesem Fall stehen die Endabschnitte in entgegengesetzte Richtungen hervor und das Filterelement weist in einer Querschnittbetrachtung in Strömungsrichtung der Luft im Wesentlichen eine S-Form auf.

Der Aufnahmeraum zwischen dem Halteelement und der Innenwand des Grundgehäuses kann bezogen auf den eingebauten Zustand der Filteranordnung, jeweils insbesondere ausschließlich, oben oder unten oder sowohl oben als auch unten ausgebildet sein. Entsprechend kann der Endabschnitt sich oben und/oder unten in einen Aufnahmeraum erstrecken. Ferner kann auch an dieser Stelle ein Aufnahmeraum seitlich, insbesondere einseitig oder beidseitig, bzw. links und/oder rechts in Strömungsrichtung betrachtet zwischen dem Halteelement und der Innenwand des Grundgehäuses vorgesehen sein.

Bevorzugt erstreckt sich der Endabschnitt parallel zu einer Strömungsrichtung der einströmenden Luft. Ausgehend von der flächigen Ebene erstreckt sich der Endabschnitt entweder in oder entgegen der Richtung der einströmenden Luft. Bevorzugt erstreckt sich der Endabschnitt senkrecht in einem Winkel von 90° von der ebenen Fläche des Filterelements oder in einem Winkel größer oder kleiner als 90°.

Bevorzugt ist der hervorstehende Endabschnitt bezogen auf den eingebauten Zustand der Filteranordnung ein oberer Endabschnitt des Filterelements. Der Endabschnitt ist bezogen auf dessen Längserstreckung gerade ausgebildet und erstreckt sich insbesondere in, bevorzugt ausschließlich, horizontaler Richtung und senkrecht zu einer Strömungsrichtung der Luft. Alternativ können weitere Endabschnitte unten und/oder seitlich vorgesehen sein.

Bevorzugt weist das Filterelement eine Rechteckform auf und der hervorstehende Endabschnitt erstreckt sich bevorzugt vollständig entlang einer der Seiten des Filterelements. Das Filterelement ist insbesondere rechteckig, insbesondere quadratisch. Bevorzugt weist genau eine der Seiten den Endabschnitt auf. Alternativ ist es möglich, dass das Filterelement mehr als einen, beispielsweise zwei, drei oder vier, von der ebenen Fläche des Filterelements hervorstehenden Endabschnitt aufweist. Beispielsweise können an zwei sich gegenüberliegenden Seiten des Filterelements solche Endabschnitte angeordnet sein. Bezogen auf den eingebauten Zustand der Filteranordnung können diese Endabschnitte oben und unten angeordnet sein. Ferner ist es denkbar, dass an dreien oder allen vier der Seiten des Filterelements je ein hervorstehender Endabschnitt vorgesehen ist.

Bevorzugt weist das Filterelement eine Rechteckform auf, wobei das Filterelement wenigstens zwei, insbesondere an sich gegenüberliegenden Seitenflächen angeordnete, hervorstehende Endabschnitte aufweist, wobei bezogen auf den eingebauten Zustand der Filteranordnung die beiden sich gegenüberliegenden Seitenflächen eine untere und eine obere Seitenfläche oder seitliche Seitenflächen des Filterelements sind oder wobei das Filterelement an sämtlichen Seitenflächen jeweils einen hervorstehenden Endabschnitt aufweist.

Bevorzugt weist das Filterelement für den Fall, dass dieses jeweils einen hervorstehenden Endabschnitt an zwei in einer Ecke aneinandergrenzenden Seitenflächen aufweist, eine Freimachung oder einen Ausschnitt an der Ecke auf. Dadurch ist es möglich, dass sich beide Endabschnitte senkrecht zu dem flächigen Bereich des Filterelements erstrecken können, beispielsweise durch Umknicken der Endabschnitte. Ansonsten wäre das Umknicken in den Eckbereichen durch einen Materialüberschuss erschwert bzw. nicht möglich. An der Ecke weist das Filterelement dann insbesondere einen eckigen Ausschnitt auf. Eine solche Ausnehmung oder Ausschnitt ist bevorzugt an wenigstens einer, zwei, drei oder allen vier Ecken eines rechteckig oder quadratisch geformten Filterelements angeordnet. Der Begriff "quadratisch" bzw. "rechteckig" schließt die vorbeschriebene Ausführungsform mit ein, bei welcher aus einem vollständig rechteckigen bzw. quadratischen Filterelement eine oder mehr Ecken wie zuvor beschrieben ausgeschnitten sind.

Bevorzugt liegt zumindest ein dem hervorstehenden Endabschnitt gegenüberliegender Endabschnitt, bevorzugt sämtliche übrigen Endabschnitte, des Filterelements bündig an der Innenwand des Gehäuses an. Insbesondere liegen jene Endabschnitte bündig an dem Gehäuse an, welche sich nicht von der ebenen Fläche des Filterelements hervor erstrecken bzw. welche keine Endabschnitte aufweisen. Im bestimmungsgemäßen Einbauzustand des Filterelements ist somit mit Vorteil kein Spalt zwischen dem Filterelement und dem Grundgehäuse vorhanden, durch den ungefilterte Luft hindurchströmen kann. Bei den bündig anliegenden Endabschnitten handelt es sich entsprechend nicht um von der ebenen Fläche des Filterelements hervorstehende Endabschnitte, sondern diese Endabschnitte liegen an der flächigen Ebene bzw. bilden einen Teil der flächigen Ebene. Unter einem bündigen Anliegen des Endabschnitts ist zu verstehen, dass der Endabschnitt nicht mit einem flächigen Bereich an dem Gehäuse anliegt, sondern mit einer endseitigen Kante an dem Gehäuse anliegt und der flächige Bereich sich im Wesentlichen senkrecht von dem Gehäuse bzw. einer Innenwand des Gehäuses erstreckt.

Bevorzugt ist das Filterelement eben oder plissiert ausgebildet. Alternativ ist das Filterelement ein Vlies, ein engmaschiges Sieb oder ein Schaumstoff. Das ebene Filterelement weist dabei keine Falten oder ähnliche Strukturen auf und das Filterelementmaterial des ebenen Filterelements ist flach ausgebildet. Ist das Filterelement plissiert, ist das Filterelement als Ganzes betrachtet ebenfalls im Wesentlichen flach ausgebildet, weist jedoch sich über das Filterelement erstreckende Falten auf. Bevorzugt ist, insbesondere ausschließlich, die ebene Fläche des Filterelements plissiert ausgebildet. Bezogen auf den eingebauten Zustand der Filteranordnung erstrecken sich die Falten bevorzugt von oben nach unten. Bevorzugt wird der hervorstehende Endabschnitt durch ein streifenförmiges Element, insbesondere einen Streifen aus Pappe oder Papier, gebildet. Bevorzugt sind die Falten des plissierten Filterelements endseitig an dem streifenförmigen Element befestigt.

Bevorzugt weist das Filterelement entlang einer an den hervorstehenden Endabschnitt angrenzenden Kante eine schlitzförmige Vertiefung auf, wobei die Vertiefung bevorzugt durch Schneiden oder Heißprägen gebildet ist oder wobei das Filterelement entlang einer an den hervorstehenden Endabschnitt angrenzenden Kante eine Verjüngung aufweist, wobei die Verjüngung bevorzugt durch eine Naht gebildet ist, welche das Material des Filterelements im Bereich der Kante komprimiert. Bevorzugt ist eine solche Vertiefung ebenfalls an einem dem Endabschnitt gegenüberliegenden zweiten Endabschnitt anordnet.

Sowohl die Vertiefung als auch die Verjüngung vereinfachen das Einsetzen des Filterelements in das Grundgehäuse. In einem Ausgangszustand vor dem Einsetzen in das Grundgehäuse ist das Filterelement als Ganzes, das bedeutet die ebene Fläche und der Endabschnitt bevorzugt vollständig eben ausgebildet. Insbesondere kann der Endabschnitt in seine von der ebenen Fläche hervorstehende Form durch Umknicken entlang der an den Endabschnitt angrenzenden Kante gebracht werden. Durch die Vertiefung bzw. Verjüngung wird zum einen die Knickkante vorgegeben und zum anderen das Umknicken des Material erleichtert.

Die Vertiefung kann dabei ein Schnitt in dem Material des Filterelements darstellen, dessen Tiefe geringfügig kleiner ist als eine Dicke des Filtermaterials. Der Abschnitt mit der ebenen Fläche des Filterelements und der Endabschnitt sind dann noch durch einen dünnen Steg miteinander verbunden, welcher eine Art Gelenk bildet, welches das Abknicken des Endabschnitts erleichtert.

Analog kann diese Art von Gelenk durch eine Verjüngung des Filterelements im Bereich der Kante gebildet werden. Die Verjüngung kann durch die Form des Filtermaterials als solche gebildet werden, das bedeutet, dass im Bereich der Verjüngung weniger Material des Filterelements vorhanden ist. Alternativ oder zusätzlich kann das elastische Material des Filterelements gestaucht bzw. zusammengedrückt werden, um die Verjüngung zu bilden, beispielsweise mittels der Naht.

Alternativ kann der hervorstehende Endabschnitt gebildet werden durch Umknicken bzw. Falten eines im Ausgangszustand eben ausgebildeten flächigen Filterelements ohne eine entsprechende Vertiefung bzw. Verjüngung.

Die erfindungsgemäße Aufgabe wird ferner gelöst durch ein Filterelement, insbesondere ausgebildet zur Verwendung in einer Filteranordnung gemäß einer der vorgenannten Ausführungsformen, wobei das Filterelement flächig ausgebildet ist mit wenigstens einem von einer ebenen Fläche des Filterelements hervorstehenden Endabschnitt. Insbesondere ist das Filterelement das im Zusammenhang mit der vorbeschriebenen Filteranordnung genannte Filterelement.

Bevorzugt weist das Filterelement entlang einer an den hervorstehenden Endabschnitt angrenzenden Kante eine schlitzförmige Vertiefung oder eine Verjüngung auf. Bei der Vertiefung bzw. Verjüngung handelt es sich insbesondere um die vorbeschriebene Vertiefung bzw. Verjüngung.

Weiterhin wird die erfindungsgemäße Aufgabe gelöst durch einen Austrittsfilter oder einen Filterlüfter jeweils aufweisend die vorgenannte Filteranordnung und aufweisend einen Gehäusedeckel und gegebenenfalls aufweisend eine Luftfördereinrichtung, insbesondere ein Lüfterrad bzw. ein Gebläse.

Nachfolgend wird die Erfindung anhand von Ausführungsbeispielen näher erläutert. Es zeigen:
- Fig. 1: eine Querschnittsansicht durch ein Gehäuse eines Austrittsfilters,
- Fig. 2: eine Querschnittsansicht durch einen Filterlüfter mit einer Filteranordnung in einer bestimmungsgemäßen Einbaulage,
- Fig 3: eine Querschnittsansicht durch einen Austrittsfilter des Filterlüfters mit einer Filteranordnung in einer nicht-bestimmungsgemäßen Einbaulage,
- Fig. 4 (a)-(b): eine Draufsicht auf ein flach ausgebreitetes Filterelement und eine Querschnittsansicht des Filterelements zur Anordnung in der Filteranordnung,
- Fig. 5 (a)-(f): unterschiedliche Ansichten des Filterelements gemäß unterschiedlichen Ausführungsformen,
- Fig. 6(a)-(b): eine Querschnittsansicht und eine Draufsicht eines Filterelements der Filteranordnung,
- Fig. 7: eine Querschnittsansicht durch einen Filterlüfter mit einer Filteranordnung mit einem plissierten Filterelement,
- Fig. 8a: eine perspektivische Ansicht des Grundgehäuses,
- Fig. 8b: eine Schnittansicht entlang der Linie A-A aus Figur 8a,
- Fig. 9a: eine erste perspektivische Ansicht einer weiteren Ausführungsform des Filterelements umfassend vier Endabschnitte, und
- Fig. 9b: eine zweite perspektivische Ansicht der weiteren Ausführungsform des Filterelements umfassend vier Endabschnitte.

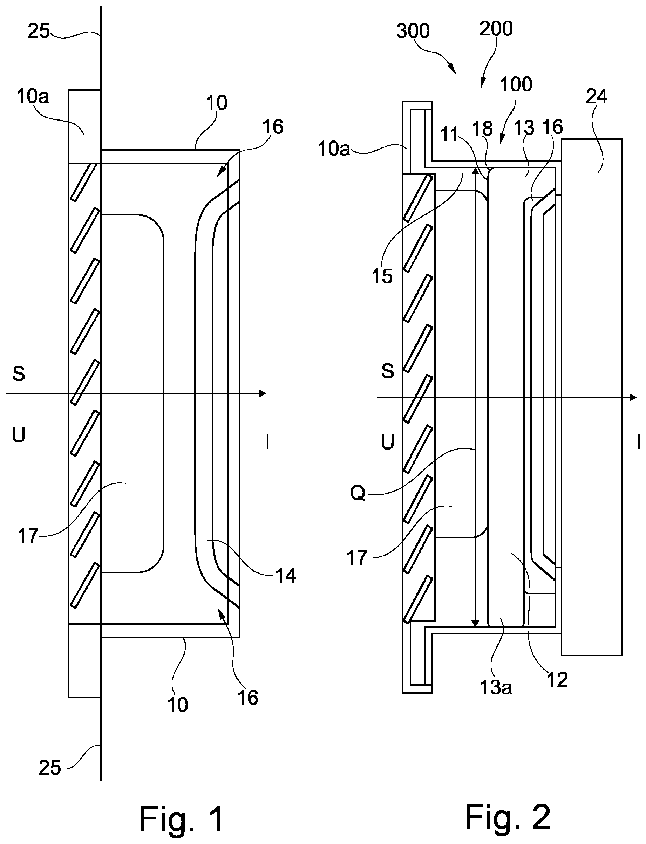

Figur 1 zeigt eine Querschnittsansicht eines Gehäuses für einen Filterlüfter 300 bzw. einen Austrittfilter 200 eines Filterlüfters 300. Das Gehäuse umfasst ein Grundgehäuse 10, in welchem ein nicht dargestelltes Filterelement 11 zwischen zwei Halteelementen 17 und einer in das Innere des Grundgehäuses 10 hineinragenden Ausformung 14 anordbar ist. In der Figur 1 ist lediglich eine der zwei Haltelemente 17 erkennbar, wobei das zweite Halteelement 17 sich in der Darstellung hinter dem ersten Halteelement 17 befindet. Beide Halteelemente 17 sind an einem Gehäusedeckel 10a des Gehäuses angeordnet. Die Ausformung 14 ist ein Berührungsschutzgitter, welches im eingebauten einem zu klimatisierenden Innenraum I angeordnet ist und einen Luftauslass hin zu einer in Figur 2 dargestellten Luftfördereinrichtung 24 bildet. Ferner umfasst das Gehäuse den Gehäusedeckel 10a, welcher einer Umgebung U zugewandt ist und eine Lamellenanordnung als Lufteinlass umfasst.

Der Austrittsfilter 200 ist in einer Wandöffnung 25 angeordnet, welcher die Umgebung U von dem zu klimatisierenden Innenbereich I trennt. Der Innenbereich I kann das Innere eines nicht dargestellten Schaltschranks oder einer Klimatisierungsvorrichtung eines Schaltschranks sein. Luft wird in Strömungsrichtung S durch den Gehäusedeckel 10a durch das nicht dargestellte Filterelement 11 hin zu dem Berührungsschutzgitter in der Ausformung 14 geführt.

Figur 2 zeigt den Filterlüfter 300 in einer Querschnittsansicht. Gezeigt ist eine Luftfördereinrichtung 24, welche ein Gebläse sein kann, mittels welcher die Luft von der Umgebung U in Strömungsrichtung S durch den Austrittsfilter 200 mit der Filteranordnung 100 in den Innenbereich I gefördert wird. Figur 2 zeigt die Filteranordnung 100, welche das Grundgehäuse 10 mit dem darin angeordneten flächigen Filterelement 11 in einer bestimmungsgemäßen Einbaulage zeigt. Das Filterelement 11 ist in einer Querschnittsfläche des Grundgehäuses 10 angeordnet, durch welches die Luft einströmt und durch das Filterelement 11 gefiltert wird. In dieser Querschnittsfläche Q erstreckt sich eine ebene Fläche 12 des Filterelements 11.

In der bestimmungsgemäßen Einbaulage, das heißt jener Einbaulage, in welcher das Filterelement 11 korrekt eingesetzt ist, erstreckt sich die ebene Fläche 12 des Filterelements 11 senkrecht zur Strömungsrichtung S der einströmenden Luft während sich ein Endabschnitt 13 von der ebenen Fläche 12 weg erstreckt. Insbesondere erstreckt sich der Endabschnitt 13 ausgehend von einer an den Endabschnitt 13 angrenzenden Kante 18 in Strömungsrichtung S der Luft. Gleichzeitig liegt der Endabschnitt 13 an dem Grundgehäuse 10 an. Insbesondere liegt der Endabschnitt 13 an einer Innenwand 15 des Grundgehäuses 10 an.

Dabei erstreckt sich der Endabschnitt 13 in einen oberen Aufnahmeraum 16 zwischen der Ausformung 14 und dem Grundgehäuse 10 bzw. der Innenwand 15 des Grundgehäuses 10. Der Endabschnitt 13 ist an einem oberen Bereich des Filterelements 11 angeordnet. An einer dem hervorstehenden Endabschnitt 13 gegenüberliegenden Seite des Filterelements 11 weist das Filterelement einen nicht hervorstehenden Endabschnitt 13a auf, welcher bündig an dem Grundgehäuse 10 anliegt.

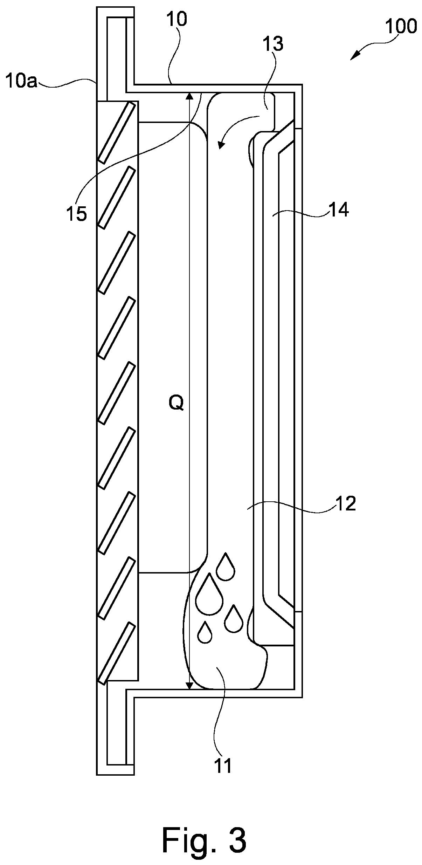

Figur 3 zeigt die Filteranordnung 100 mit dem Filterelement 11 in einer nicht bestimmungsgemäßen Einbaulage. In der nicht bestimmungsgemäßen Einbaulage hat sich Feuchtigkeit in dem Filterelement 11 angesammelt, sodass dieses aufgrund der Schwerkraft nach unten rutscht und sich dort staucht. Bei herkömmlichen, in der bestimmungsgemäßen Einbaulage vollständig eben eingebauten Filterelementen 11 würde in dieser Situation oben ein Spalt entstehen, durch welchen Luft ungefiltert hindurchtreten könnte. Um dies zu verhindern weist das Filterelement 11 an dessen oberen Seite den hervorstehenden Endabschnitt 13 auf, welcher nun wie durch den Pfeil angedeutet nach unten nachrutscht, sodass die durchströmte Querschnittsfläche Q weiterhin vollständig von dem Filterelement 11 abgedeckt ist.

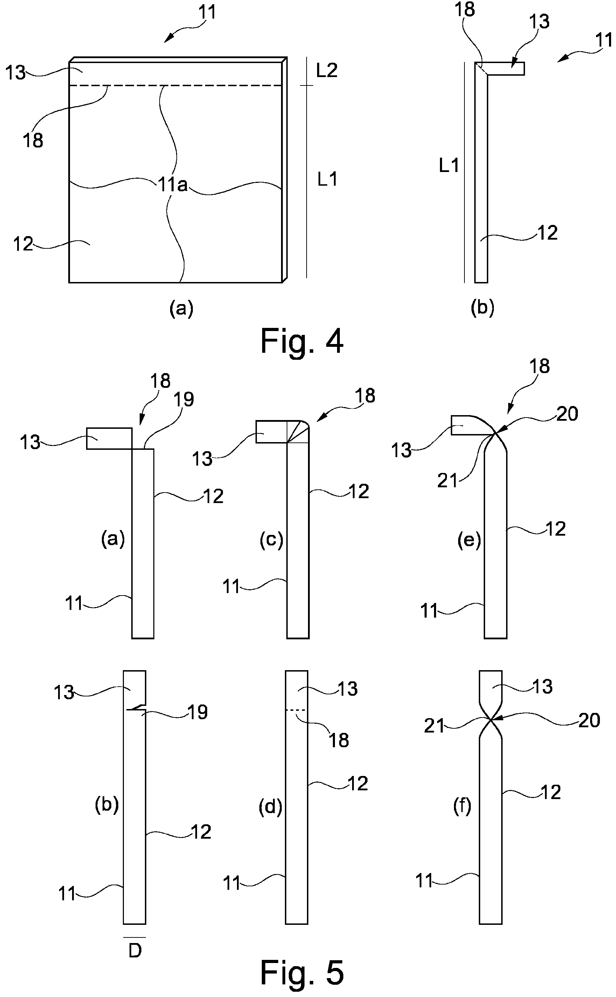

Figuren 4 (a) und 4 (b) zeigen das Filterelement 11 in einem flach ausgebreiteten Zustand (Fig. 4 (a)) und in einem gebogenen bzw. geknickten Zustand (Fig. 4 (b)). Wie in Figur 4 (a) zu erkennen, sind der Endabschnitt 13 und die ebene Fläche 12 des Filterelements in flach ausgebreitetem Zustand des Filterelements 11 in der gleichen Ebene angeordnet. Eine Kante 18, entlang derer der Endabschnitt 13 umbiegbar bzw. knickbar ist, ist durch die gestrichelte Linie angedeutet. Der flächige Bereich L1 weist eine Länge L1, welche sehr viel größer gegenüber einer Länge L2 des Endabschnitts 13 ist.

Das Filterelement 11 ist rechteckig bzw. quadratisch ausgebildet mit vier Seiten 11a. Der hervorstehende Endabschnitt 13 ist an einer der vier Seiten 11a angeordnet. An den übrigen Seiten 11a kann das Filterelement 11 flach ausgebildet sein und weist keine Endabschnitte 13 auf, welche hervorstehen. An diesen Seitenflächen 11a liegt das Filterelement 11 insbesondere bündig an den Innenwänden des Grundgehäuses 10 an.

Figur 5 zeigt drei Ausführungsformen des Filterelements 11 jeweils im geknickten bzw. gebogenen Zustand (Fig. 5 (a), (c), (e)) und im flach ausgebreiteten Zustand (Fig. 5 (b), (d), (f)).

Gemäß einer ersten Ausführungsform (Fig. 5 (a), (b)) weist das Filterelement 11 im Bereich der Kante 18 zwischen der ebenen Fläche 12 und dem Endabschnitt 13 eine schlitzförmige Vertiefung 19 auf. Diese kann durch Schneiden oder Heiß-Prägen gebildet sein. Die Vertiefung erstreckt sich nicht über die vollständige Dicke D des Filterelements 11, sodass eine Art Gelenk bzw. Scharnier gebildet wird, um welches der Endabschnitt 13 relativ zu der ebenen Fläche 12 rotierbar ist.

Gemäß einer zweiten Ausführungsform (Fig. 5 (c), (d)) ist das Filterelement 11 als ein durchgängiges Element ausgebildet, welches aufgrund der Flexibilität bzw. Elastizität des Materials des Filterelements 11 zur Bildung der Kante 18 biegbar bzw. knickbar ist.

Gemäß einer dritten Ausführungsform (Fig. 5 (e), (f)) weist das Filterelement 11 im Bereich der Kante 18 eine Verjüngung 20 auf, welche das Umknicken bzw. Umbiegen des Filterelements 11 erleichtert. Die Verjüngung 20 ist durch eine Naht 21, welche sich entlang der Kante 18 erstreckt, gebildet, welche das Material des Filterelements 11 in diesem Bereich komprimiert.

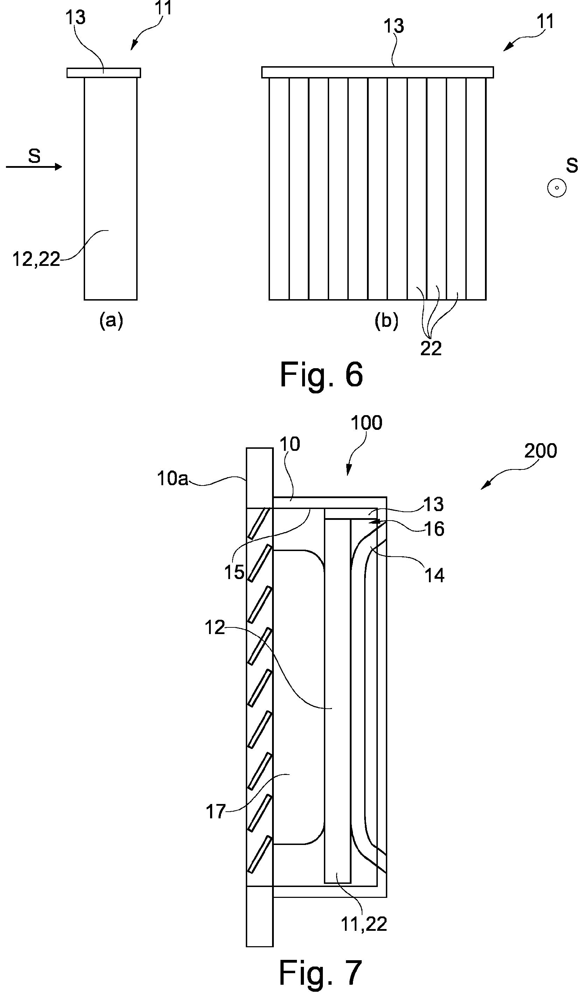

Figuren 6 und 7 zeigen eine Ausführungsform der Filteranordnung 100, welche ein plissiertes Filterelement 11 umfasst.

Figuren 6 (a) und 6 (b) zeigen eine Seitenansicht auf das Filterelement 11 senkrecht zu der Strömungsrichtung S der Luft bezogen auf den eingebauten Zustand der Filteranordnung 100 (Fig. 6 (a)) sowie eine Draufsicht in Strömungsrichtung S auf das Filterelement 11 (Fig. 6 (b)). Das Filterelement 11 weist Falten 22 auf, welche sich über die ebene Fläche 12 des Filterelements erstrecken. Der von der ebenen Fläche 12 hervorstehende Endabschnitt 13 wird durch ein streifenförmiges Element gebildet, welches insbesondere ein Streifen auf Pappe oder Papier sein kann. Das streifenförmige Element erstreckt sich entlang einer der Seiten, insbesondere einer oberen Seite bezogen auf den aufgebauten Zustand, des Filterelements 11.

Figur 7 zeigt das Filterelement 11 aus Figur 6 in der Filteranordnung 200. Die plissierte, ebene Fläche 12 ist zwischen den Halteelementen 17 und der Ausformung 14 angeordnet. Von der plissierten, ebenen Fläche 12 erstreckt sich senkrecht der Endabschnitt 13 bzw. das streifenförmige Element in den Aufnahmeraum 16 hinein. Das streifenförmige Element liegt dabei an dem Grundgehäuse 10 bzw. dessen Innenwand 15 an.

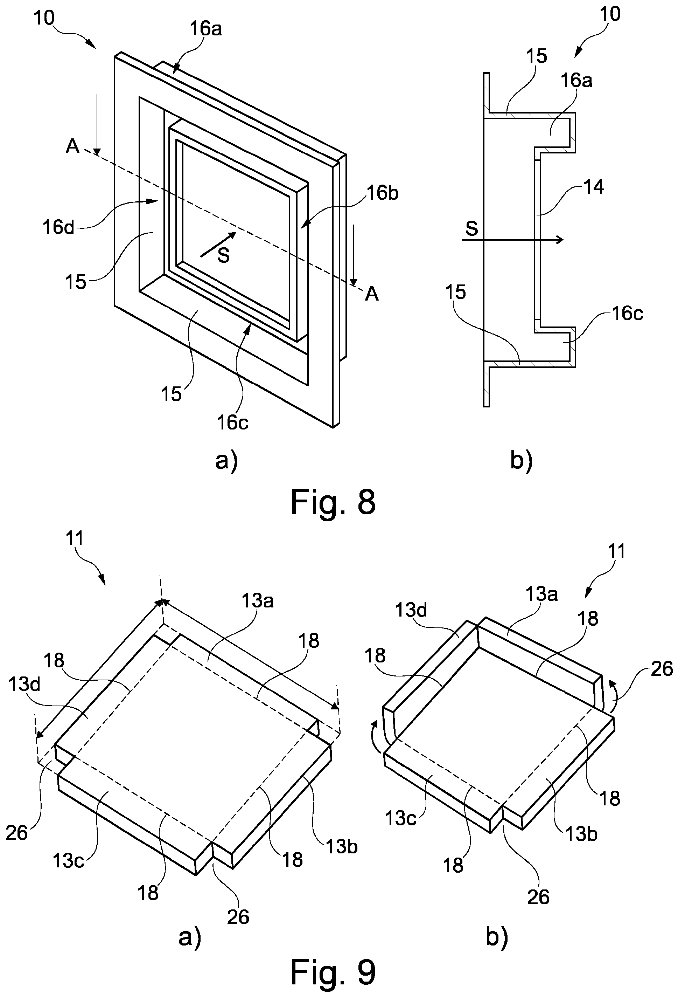

Figur 8 a) zeigt eine perspektivische Ansicht des Grundgehäuses 10. Das Grundgehäuse 10 ist rahmenförmig ausgebildet mit der Ausformung 14, welche als rahmenförmige, in das Innere des Grundgehäuses 10 hineinragende Kante ausgebildet ist. Zwischen der Ausformung 14 und der Innenwand 15 des Grundgehäuses 10 ist ein umlaufender Aufnahmeraum 16 gebildet, welcher sich aus den einzelnen Aufnahmeräumen 16a, 16b, 16c, 16d an den einzelnen Seiten des rahmenförmigen Grundgehäuses 10 zusammensetzt. Die Aufnahmeräume 16a, 16b, 16c, 16d sind somit miteinander verbunden. Somit weist das Grundgehäuse 10 einen oberen Aufnahmebereich 16a, einen unteren Aufnahmebereich 16c sowie zwei seitliche Aufnahmebereiche 16b, 16d auf. Bezogen auf die Strömungsrichtung S der einströmenden Luft bildet der Aufnahmebereich 16b einen rechten Aufnahmebereich und der Aufnahmebereich 16c einen linken Aufnahmebereich. Figur 8 b) zeigt eine Schnittansicht entlang der Linie A-A aus Figur 8 a). Dargestellt sind die Ausformung 14 sowie der obere und der untere Aufnahmebereich 16a, 16c.

Figur 9 a) zeigt eine perspektivische Ansicht auf eine weitere Ausführungsform des Filterelements 11. Das Filterelement 11 ist quadratisch ausgebildet und weist an jeder der vier Seiten einen Endabschnitt 13a, 13b, 13c, 13d auf. Somit weist das Filterelement 11 vier Endabschnitte 13a, 13b, 13c, 13d auf. Damit die vier Endabschnitte 13a, 13b, 13c, 13d, wie in Figur 9 b) dargestellt, um die Kanten 18 umgeklappt werden können, sodass diese sich in den Aufnahmeraum 14 erstrecken können, sind an jedem der vier Eckbereiche des Filterelements 11, an denen je zwei Endabschnitte 13a, 13b, 13c, 13d aneinandergrenzen, Eckausschnitte 26 vorgesehen. Ohne diese Eckausschnitte 26 wäre das Umklappen der Endabschnitte 13a, 13b, 13c, 13d um die Kanten 18 nur schwer oder gar nicht möglich aufgrund eines Materialüberschusses. In Figur 9 b) ist exemplarisch lediglich das Umklappen von zwei Endabschnitten 13a, 13d gezeigt.

Zum Einsetzen in das Grundgehäuse 10 werden jedoch alle Endabschnitte 13a, 13b, 13c, 13d in dieser Darstellung nach oben umgeklappt.

Das in den Figuren 9 a) und 9 b) dargestellte Filterelement 11 ist insbesondere zur Verwendung in dem Grundgehäuse 10 aus Figur 8 a) und 8 b) ausgebildet. Die Endabschnitte 13a, 13b, 13c, 13d erstrecken sich dabei in die Aufnahmeräume 16a, 16b, 16c, 16d.

### Bezugszeichenliste

- 100: Filteranordnung
- 200: Austrittsfilter
- 300: Filterlüfter

- 10: Grundgehäuse
- 10a: Gehäusedeckel
- 11: Filterelement
- 11a: Seiten
- 12: ebene Fläche
- 13, 13a-d: hervorstehender Endabschnitt
- 13a: Endabschnitt
- 14: Ausformung
- 15: Innenwand
- 16, 16a-d: Aufnahmeraum
- 17: Halteelement
- 18: Kante
- 19: Vertiefung

- 20: Verjüngung
- 21: Naht
- 22: Falten
- 23: streifenförmiges Element
- 24: Luftfördereinrichtung
- 25: Wandausschnitt
- 26: Eckausschnitt

- S: Strömungsrichtung der Luft
- U: Umgebung
- I: Innenbereich
- L1: Länge der ebenen Fläche
- L2: Länge des Endabschnitts
- Q: Querschnittsfläche
- D: Dicke

## Patentansprüche

1. Filteranordnung (100) für einen Filterlüfter (300) oder Austrittsfilter (200), umfassend ein Grundgehäuse (10) und ein in dem Grundgehäuse (10) angeordnetes flächiges Filterelement (11) zur Filterung von durch das Grundgehäuse (10) strömender Luft, wobei das Filterelement (11) zumindest einen von einer ebenen Fläche (12) des Filterelements (11) hervorstehenden Endabschnitt (13) aufweist, wobei der Endabschnitt (13) an dem Grundgehäuse (10) anliegt.

2. Filteranordnung (100) nach Anspruch 1, wobei das Filterelement (11) in Strömungsrichtung (S) der einströmenden Luft betrachtet vor einer in das Innere des Grundgehäuses (10) hineinragenden Ausformung (14) des Grundgehäuses (10) angeordnet ist, wobei zwischen der Ausformung (14) und einer Innenwand (15) des Grundgehäuses (10) wenigstens ein Aufnahmeraum (16) ausgebildet ist, in welchen sich der Endabschnitt (13) erstreckt.

3. Filteranordnung (100) nach Anspruch 2, wobei der Aufnahmeraum (16) bezogen auf einen eingebauten Zustand der Filteranordnung (100) oberhalb der Ausformung (14) angeordnet ist.

4. Filteranordnung (100) nach Anspruch 2, wobei die Ausformung (14) des Grundgehäuses (10) ein Schutzelement, insbesondere ein Schutzgitter, ist.

5. Filteranordnung (100) nach einem der vorgenannten Ansprüche, wobei eine Fläche des Filterelements (11) im flach ausgebreiteten Zustand größer ist als eine Querschnittsfläche des Grundgehäuses (10) senkrecht zu einer Strömungsrichtung (S) der einströmenden Luft in dem Bereich, in dem das Filterelement (11) angeordnet ist.

6. Filteranordnung (100) nach einem der vorgenannten Ansprüche, umfassend wenigstens ein Halteelement (17), bevorzugt zwei Halteelemente (17), welche an dem Filterelement (11) anliegen zur Fixierung des Filterelements (11) in dem Grundgehäuse (10), wobei das Filterelement (11) bevorzugt klemmend zwischen dem Halteelement (17) und einer in das Innere des Grundgehäuses (10) hineinragenden Ausformung (14) des Grundgehäuses (10) aufgenommen ist.

7. Filteranordnung (100) nach einem der vorgenannten Ansprüche, wobei sich der Endabschnitt (13) parallel zu einer Strömungsrichtung (S) der einströmenden Luft erstreckt, und/oder
wobei bezogen auf den eingebauten Zustand der Filteranordnung (100) der hervorstehende Endabschnitt (13) ein oberer Endabschnitt (13) des Filterelements (11) ist.

8. Filteranordnung (100) nach einem der vorgenannten Ansprüche, wobei das Filterelement (11) eine Rechteckform aufweist und der hervorstehende Endabschnitt (13) sich vollständig entlang einer der Seiten (11a) des Filterelements (11) erstreckt.

9. Filteranordnung (100) nach einem der vorgenannten Ansprüche, wobei das Filterelement (11) eine Rechteckform aufweist und wobei das Filterelement (11) wenigstens zwei, insbesondere an sich gegenüberliegenden Seitenflächen angeordnete, hervorstehende Endabschnitte (13a, 13b, 13c, 13d) aufweist, wobei bezogen auf den eingebauten Zustand der Filteranordnung (100) die beiden sich gegenüberliegenden Seitenflächen eine untere und eine obere Seitenfläche oder seitliche Seitenflächen des Filterelements (11) sind oder wobei das Filterelement (11) an sämtlichen Seitenflächen jeweils einen hervorstehenden Endabschnitt (13a, 13b, 13c, 13d) aufweist.

10. Filteranordnung (100) nach einem der Ansprüche 1 bis 8, wobei zumindest ein dem hervorstehenden Endabschnitt (13) gegenüberliegender Endabschnitt (13a), bevorzugt sämtliche übrigen Endabschnitte, des Filterelements bündig an der Innenwand (15) des Gehäuses (10) anliegt.

11. Filteranordnung (100) nach einem der vorgenannten Ansprüche, wobei das Filterelement (11) eben oder plissiert ausgebildet ist oder wobei das Filterelement (11) ein Vlies ist.

12. Filteranordnung (100) nach einem der vorgenannten Ansprüche, wobei das Filterelement (11) entlang einer an den hervorstehenden Endabschnitt (13) angrenzenden Kante (18) eine schlitzförmige Vertiefung (19) aufweist, wobei die Vertiefung (19) bevorzugt durch Schneiden oder Heißprägen gebildet ist oder wobei das Filterelement (11) entlang einer an den hervorstehenden Endabschnitt (13) angrenzenden Kante (18) eine Verjüngung (20) aufweist, wobei die Verjüngung (20) bevorzugt durch eine Naht (21) gebildet ist, welche das Material des Filterelements (11) im Bereich der Kante (21) komprimiert.

13. Filterelement (11), insbesondere ausgebildet zur Verwendung in einer Filteranordnung (100) nach einem der vorgenannten Ansprüche, wobei das Filterelement (11) flächig ausgebildet ist mit wenigstens einem von einer ebenen Fläche (12) des Filterelements (11) hervorstehenden Endabschnitt (13).

14. Filterelement (11) nach Anspruch 13, wobei das Filterelement (11) entlang einer an den hervorstehenden Endabschnitt (13) angrenzenden Kante (18) eine schlitzförmige Vertiefung (19) oder eine Verjüngung (20) aufweist.

15. Austrittsfilter (200) oder Filterlüfter (300), aufweisend eine Filteranordnung (100) nach einem der Ansprüche 1 bis 12, einen Gehäusedeckel (10a) und gegebenenfalls aufweisend eine Luftfördereinrichtung (24), insbesondere ein Gebläse.

## Geänderte Patentansprüche

### Geänderte Patentansprüche gemäss Regel 137(2) EPÜ.

1. Filteranordnung (100) für einen Filterlüfter (300) oder Austrittsfilter (200), umfassend ein Grundgehäuse (10) und ein in dem Grundgehäuse (10) angeordnetes flächiges Filterelement (11) zur Filterung von durch das Grundgehäuse (10) strömender Luft, wobei das Filterelement (11) zumindest einen von einer ebenen Fläche (12) des Filterelements (11) hervorstehenden Endabschnitt (13) aufweist, wobei der Endabschnitt (13) an dem Grundgehäuse (10) anliegt, wobei das Filterelement (11) in Strömungsrichtung (S) der einströmenden Luft betrachtet vor einer in das Innere des Grundgehäuses (10) hineinragenden Ausformung (14) des Grundgehäuses (10) angeordnet ist, wobei zwischen der Ausformung (14) und einer Innenwand (15) des Grundgehäuses (10) wenigstens ein Aufnahmeraum (16) ausgebildet ist, in welchen sich der Endabschnitt (13) erstreckt.

2. Filteranordnung (100) nach Anspruch 1, wobei der Aufnahmeraum (16) bezogen auf einen eingebauten Zustand der Filteranordnung (100) oberhalb der Ausformung (14) angeordnet ist.

3. Filteranordnung (100) nach Anspruch 1, wobei die Ausformung (14) des Grundgehäuses (10) ein Schutzelement, insbesondere ein Schutzgitter, ist.

4. Filteranordnung (100) nach einem der vorgenannten Ansprüche, wobei eine Fläche des Filterelements (11) im flach ausgebreiteten Zustand größer ist als eine Querschnittsfläche des Grundgehäuses (10) senkrecht zu einer Strömungsrichtung (S) der einströmenden Luft in dem Bereich, in dem das Filterelement (11) angeordnet ist.

5. Filteranordnung (100) nach einem der vorgenannten Ansprüche, umfassend wenigstens ein Halteelement (17), bevorzugt zwei Halteelemente (17), welche an dem Filterelement (11) anliegen zur Fixierung des Filterelements (11) in dem Grundgehäuse (10), wobei das Filterelement (11) bevorzugt klemmend zwischen dem Halteelement (17) und einer in das Innere des Grundgehäuses (10) hineinragenden Ausformung (14) des Grundgehäuses (10) aufgenommen ist.

6. Filteranordnung (100) nach einem der vorgenannten Ansprüche, wobei sich der Endabschnitt (13) parallel zu einer Strömungsrichtung (S) der einströmenden Luft erstreckt, und/oder
wobei bezogen auf den eingebauten Zustand der Filteranordnung (100) der hervorstehende Endabschnitt (13) ein oberer Endabschnitt (13) des Filterelements (11) ist.

7. Filteranordnung (100) nach einem der vorgenannten Ansprüche, wobei das Filterelement (11) eine Rechteckform aufweist und der hervorstehende Endabschnitt (13) sich vollständig entlang einer der Seiten (11a) des Filterelements (11) erstreckt.

8. Filteranordnung (100) nach einem der vorgenannten Ansprüche, wobei das Filterelement (11) eine Rechteckform aufweist und wobei das Filterelement (11) wenigstens zwei, insbesondere an sich gegenüberliegenden Seitenflächen angeordnete, hervorstehende Endabschnitte (13a, 13b, 13c, 13d) aufweist, wobei bezogen auf den eingebauten Zustand der Filteranordnung (100) die beiden sich gegenüberliegenden Seitenflächen eine untere und eine obere Seitenfläche oder seitliche Seitenflächen des Filterelements (11) sind oder wobei das Filterelement (11) an sämtlichen Seitenflächen jeweils einen hervorstehenden Endabschnitt (13a, 13b, 13c, 13d) aufweist.

9. Filteranordnung (100) nach einem der Ansprüche 1 bis 7, wobei zumindest ein dem hervorstehenden Endabschnitt (13) gegenüberliegender Endabschnitt (13a), bevorzugt sämtliche übrigen Endabschnitte, des Filterelements bündig an der Innenwand (15) des Gehäuses (10) anliegt.

10. Filteranordnung (100) nach einem der vorgenannten Ansprüche, wobei das Filterelement (11) eben oder plissiert ausgebildet ist oder wobei das Filterelement (11) ein Vlies ist.

11. Filteranordnung (100) nach einem der vorgenannten Ansprüche, wobei das Filterelement (11) entlang einer an den hervorstehenden Endabschnitt (13) angrenzenden Kante (18) eine schlitzförmige Vertiefung (19) aufweist, wobei die Vertiefung (19) bevorzugt durch Schneiden oder Heißprägen gebildet ist oder wobei das Filterelement (11) entlang einer an den hervorstehenden Endabschnitt (13) angrenzenden Kante (18) eine Verjüngung (20) aufweist, wobei die Verjüngung (20) bevorzugt durch eine Naht (21) gebildet ist, welche das Material des Filterelements (11) im Bereich der Kante (21) komprimiert.

12. Filterelement (11), insbesondere ausgebildet zur Verwendung in einer Filteranordnung (100) nach einem der vorgenannten Ansprüche, wobei das Filterelement (11) flächig ausgebildet ist mit wenigstens einem von einer ebenen Fläche (12) des Filterelements (11) hervorstehenden Endabschnitt (13).

13. Filterelement (11) nach Anspruch 12, wobei das Filterelement (11) entlang einer an den hervorstehenden Endabschnitt (13) angrenzenden Kante (18) eine schlitzförmige Vertiefung (19) oder eine Verjüngung (20) aufweist.

14. Austrittsfilter (200) oder Filterlüfter (300), aufweisend eine Filteranordnung (100) nach einem der Ansprüche 1 bis 11, einen Gehäusedeckel (10a) und gegebenenfalls aufweisend eine Luftfördereinrichtung (24), insbesondere ein Gebläse.
